# EUROPÄISCHE PATENTSCHRIFT

(11) **EP 2 272 667 B1**
(45) Veröffentlichungstag und Bekanntmachung des Hinweises auf die Patenterteilung: **26.02.2020**
(21) Anmeldenummer: 09164660.4
(22) Anmeldetag: 06.07.2009
(51) Int. Cl.: B32B 21/04, B32B 27/04, B32B 27/20, B32B 27/30, B32B 27/42, B44C 5/04

(54) **Holzwerkstoffplatte und ein Verfahren zu deren Herstellung**
Wood material board and method for its manufacture
Plaque en matière dérivée du bois et son procédé de fabrication

(43) Veröffentlichungstag der Anmeldung: 12.01.2011
(73) Patentinhaber: Välinge Innovation AB, 263 65 Viken (SE)
(72) Erfinder:
(74) Vertreter: Westeman, Maria

(56) Entgegenhaltungen:
- EP-A- 0 732 449
- EP-A- 1 961 556
- WO-A-2005/080096
- DE-U1- 20 100 843

## Beschreibung

Die Erfindung betrifft eine Holzwerkstoffplatte nach dem Oberbegriff des Anspruchs 1 und ein Verfahren zu deren Herstellung nach Anspruch 14.

Holzwerkstoffplatten, insbesondere solche die als Fußbodenplatten in Laminatböden verwendet werden, verfügen üblicherweise über eine Oberfläche aus ausgehärteten Melaminharzen.

Mit Melamin beschichtete Laminatböden neigen jedoch zur elektrostatischen Aufladung, die zu unerwünschten Stromschlägen beim Begehen und beim Anfassen von Gegenständen führt. Dieser Stromschlag, dem eine Person bei Berühren des Bodenbelages ausgesetzt sein kann, wird zum anderen als sehr unangenehm empfunden. Zum anderen können Stromschläge auch zu Beschädigungen an Computern oder Vorrichtungen der Unterhaltungselektronik führen. Das Problem der elektrostatischen Aufladung ist darin begründet, dass der Oberflächenwiderstand des verwendeten Melaminharzes zwischen 10¹² und 10¹⁴ Ohm beträgt, womit Melaminharze den Isolatoren zugerechnet werden.

Es wurden verschiedene Versuche unternommen, dieses Problem zu lösen. So wurde im Randbereich einer verlegten Fläche, insbesondere im Randbereich von zusammenwirkenden Flächen, eine Beschichtung aus einem elektrisch leitfähigen Material aufgetragen (DE 103 26 084 A1). Dies führt jedoch nur bei kleinen Flächen zu befriedigenden Ergebnissen.

Eine weitere Möglichkeit besteht in der Verwendung eines polymeren Materiales, insbesondere Polyanilin oder Polypyroll, als antistatische Schicht, welche auf der Unterseite oder auf der Oberseite den üblicherweise verwendeten Dekorschichten aufgebracht ist (DE 101 15 567 C1).

In der DE 201 00 843 U1 wird ein Antistatik-Bodenbelag beschrieben, bei der auf der Rückseite des Bodenbelages eine Dämmunterlage mit Füllstoffen vorgesehen ist, wobei als Füllstoffe elektrisch leitende Materialien, wie zum Beispiel kohlenstoffhaltige Pulver, Graphitpulver, Eisenpulver oder Eisenspäne, verwendet werden.

Auch die Erhöhung der relativen Luftfeuchte durch Aufstellen von Klimageräten kann zur Reduzierung der elektrostatischen Aufladung von Laminatfußböden beitragen. Dieser Ansatz ist jedoch sehr kostenintensiv.

Des Weiteren wurde ebenfalls versucht, durch Zugabe von Salzen oder Nanopartikeln in die Imprägnierungsmittel der verschiedenen Papierlagen, die zur Herstellung von Laminatböden verwendet werden, die Leitfähigkeit zu erhöhen. Hierbei treten jedoch Verfärbungen auf und eine Verschlechterung der Oberflächeneigenschaften, wie zum Beispiel der Chemikalienbeständigkeit, ist zu beobachten.

Die Zugabe von Russ oder Kohlefasern zur Verbesserung der Ableitung der elektrostatischen Ladung wie auch weiterer Additive in die Oberflächenschicht waren bis jetzt jedoch nicht realisierbar, da diese zu Verschmutzungen und Farbveränderungen führen.

Insgesamt bestehen nur wenige Möglichkeiten, Hilfsstoffe oder Additive in den Aufbau eines üblicherweise verwendeten Laminatbodens bestehend aus einem Overlay- Papier, Dekorpapier, Faserplatte und Gegenzugsbeschichtung Hilfsstoffe zu integrieren.

Der vorliegenden Erfindung liegt daher die Aufgabe zu Grunde, eine Holzwerkstoffplatte mit einer Oberflächenschicht zur Verfügung zu stellen, in welche Hilfsstoffe bzw. Additive in einem größerem Umfang integrierbar sind, wobei diese Hilfsstoffe bzw. Additive der Werkstoffplatte neue Eigenschaften verleihen können.

Diese Aufgabe wird erfindungsgemäß durch eine Holzwerkstoffplatte mit den Merkmalen des Anspruchs 1 gelöst.

Die erfindungsgemäße Holzwerkstoffplatte umfasst demnach eine Oberflächenschicht auf einem Substrat, wobei die Oberflächenschicht mindestens eine Lage aufweist. Die mindestens eine Lage umfasst natürliche oder synthetische Fasern, mindestens ein Bindemittel, abriebfeste Partikel und mindestens ein Additiv.

Die quantitative Zusammensetzung des zur Herstellung der Oberflächenschicht aufgetragenen Pulvers ist wie folgt:
- Fasern: 30 bis 65 Gew%, bevorzugt 40 bis 60 Gew%,
- Bindemittel: 20 bis 45 Gew%, bevorzugt 30 bis 40 Gew%
- Abriebfeste Partikel: 5 bis 25 Gew%, bevorzugt 10 bis 20 Gew%, und
- Additiv: 0 bis 8 Gew%, bevorzugt 0,5 bis 6 Gew%.

Die verwendeten Additive können der Werkstoffplatten neuartige Eigenschaften verleihen und somit bei Verwendung der Werkstoffplatten als Fussbodenpaneele zur Veränderung der physikalischen Eigenschaften z.B. des Laminatbodens beitragen.

In einer bevorzugten Ausführungsform umfasst die Oberflächenschicht mindestens eine obere Lage und eine untere Lage.

Die Dicke der gesamten Oberflächenschicht kann zwischen 0,05 und 10 mm, insbesondere zwischen 0,2 und 5 mm liegen. Die obere Lage weist bevorzugt eine Dicke zwischen 0,05 und 7 mm auf, wohingegen die untere Lage eine bevorzugte Dicke zwischen 0,5 und 3 mm aufweist. Insbesondere ist eine Dicke einer der beiden Lagen von 0,7 mm bevorzugt.

Die obere Lage kann bevorzugt einen Anteil zwischen 0 bis 1 Gew % des Additivs enthalten, während der Anteil des Additivs in der unteren Lage vorteilhafterweise zwischen 0,5 bis 5 % beträgt. Mit dieser Verteilung des Additivs wird sichergestellt, dass keine Einbusse in den Oberflächeneigenschaften auftritt.

In einer weiteren Ausführungsform weist die untere Lage keine abriebfesten Partikel auf. Diese sind bevorzugt zur Erhöhung der Verschleißfestigkeit der Oberflächenschicht in die obere Lage eingetragen.

Das mindestens eine Additiv ist ausgewählt aus der Gruppe enthaltend leitfähige Substanzen. Darüber hinaus ist die Zugabe von weiteren Additiven zusätzlich zu den leitfähigen Substanzen möglich. Diese weiteren Additive können ausgewählt sein aus der Gruppe enthaltend Flammschutzmittel, luminiszierende Stoffe und Metalle.

Dabei können die leitfähigen Substanzen ausgewählt sein aus der Gruppe enthaltend Russ, Kohlefasern, Metallpulver und Nanopartikel, insbesondere Kohlenstoffnanoröhren. Es können auch Kombinationen dieser Substanzen zum Einsatz kommen.

Es ist insbesondere von Vorteil, wenn bei einer Werkstoffplatte mit einer Oberflächenschicht umfassend mindestens zwei Lagen die obere Lage keine leitfähigen Substanzen enthält, sondern diese lediglich in der unteren Lage enthalten sind. Es muss hierbei lediglich gewährleistet sein, dass die untere Lage eine erhöhte Menge an leitfähigen Substanzen enthält, um eine ausreichende Ladungsableitung zu bewirken.

In einer weiteren Ausführungsform ist das Additiv ausgewählt aus der Gruppe der Flammschutzmittel enthaltend Phosphate, Borate, insbesondere Ammoniumpolyphosphat, Tris(tri-bromneopentyl)phosphat, Zinkborat oder Borsäurekomplexe von mehrwertigen Alkoholen.

Die Verwendung von Flammenschutzmittel führt zu einer Verringerung der Entflammbarkeit und ist daher insbesondere bei Laminatböden von Bedeutung, die in geschlossenen Räumen mit besonderen Anforderungen an den Brandschutz oder in Fluchtwegen eingesetzt werden.

Als luminiszierende Stoffe werden bevorzugt fluoreszierende und/oder phosphoreszierende Stoffe auf anorganischer oder organischer Basis, insbesondere Zinksulfid und Erdalkalialuminate.

Die luminiszierenden Stoffe können in geometrischen Formen durch Schablonen auf die Oberfläche aufgetragen werden. Durch das Einarbeiten dieser Farbstoffe in die Oberfläche von Werkstoffplatten, die als Fußboden- oder Wandpaneele zum Beispiel in geschlossenen Räumen eingesetzt werden können, ist somit bei Ausfall der Beleuchtung ein Hinweis über Fluchtwege und Fluchtrichtung möglich.

Die verwendeten natürlichen oder synthetischen Fasern sind bevorzugt ausgewählt aus der Gruppe enthaltend Holzfasern, Zellulosefasern, Wollfasern, Hanffasern und organische oder anorganische Polymerfasern.

Als Bindemittel kommt vorteilhafterweise ein Bindemittel ausgewählt aus der Gruppe enthaltend Melaminharze, Acrylatharze und Polyurethanharze zum Einsatz.

Die abriebfesten Partikel sind bevorzugt ausgewählt aus der Gruppe enthaltend Aluminiumoxide, Korund, Borcarbide, Siliziumdioxide, Siliziumcarbide und Glaskugeln.

Prinzipiell kann als Substrat eine Trägerplatte aus einem Holzwerkstoff oder aus Kunststoff oder einem Holzwerkstoff-Kunststoff-Gemisch verwendet werden, insbesondere eine Span-, mitteldichte Faser (MDF)-, hochdichte Faser (HDF)- oder Grobspan (OSB)- oder Sperrholzplatten, eine Zementfaserplatte und/oder Gipsfaserplatte.

Zusätzlich zu der erfindungsgemäßen Oberflächenschicht kann das Substrat in einer Ausführungsform mindestens eine Dekorlage, eine Trägerplatte und mindestens eine Gegenzugsbeschichtung umfassen. Zusätzlich ist es möglich auf der Rückseite des Substrates eine schalldämmende Schicht anzubringen.

Die Dekorlage ist bevorzugt zwischen Substrat und Oberflächenschicht angeordnet. Die Dekore für die oberen Flächen der Trägerplatten können dabei auf einer Papierlage oder direkt auf die plattenförmige Basis gedruckt vorliegen. Solche Dekore sind beispielsweise Holz- oder Steinimitationen. Auch Fantasiedekore sind möglich. Diese können sich beispielsweise aus Abwandlungen von natürlichen Werkstoffen ergeben.

Die schalldämmende Schicht ist bevorzugt auf Substratunterseite, die der Oberflächensicht gegenüberliegt, angeordnet. Als schalldämmende Schichten kommen vernetzte PE-Matten mit Dicken von 1,0 mm oder 0,3 bis 3 mm dicke gefüllte Schwerfolien, aber auch geschäumte PE- oder PU-Folien zum Einsatz.

Auch ist es vorstellbar, wenn in der Oberflächensicht weitere Pigmente, wie Farbpigmente oder ähnliches mit einem Anteil von 1 bis 5 Gew%, bevorzugt 2 bis 4 Gew% enthalten sind. Die Holzwerkstoffplatte gemäß der vorliegenden Erfindung ist aufgrund der hervorragenden Abriebfestigkeit in Verbindung mit den neuartigen Eigenschaften als Fußbodenplatte, einsetzbar.

Die Herstellung der Holzwerkstoffplatte erfolgt gemäß der vorliegenden Erfindung in einem Verfahren umfassend die folgende Schritte:
a) Auftragen von natürlichen oder synthetischen Fasern, von mindestens einem Bindemittel, von abriebfesten Partikeln, und von mindestens ein Additiv, insbesondere ein Additiv ausgewählt aus der Gruppe enthaltend leitfähige Substanzen, sowie zusätzlich Flammschutzmittel und/oder luminiszierende Stoffe, auf das Substrat, und
b) Aushärten des Gemisches bei einem Druck zwischen 3 und 8 MPa und einer Temperatur zwischen 150 und 250°C unter Ausbildung der Oberflächenschicht auf dem Substrat.

Die einzelnen Komponenten der Oberflächensicht können dabei einzeln nacheinander oder als Gemisch auf das Substrat aufgetragen werden. So ist es möglich, die einzelnen Komponenten auf das Substrat zu streuen oder das Gemisch in einem Druckvorgang aufzubringen.

In einer bevorzugten Ausführungsform werden zunächst die Fasern, die abriebfesten Partikel, das Bindemittel und das Additiv in der gewünschten Menge zusammen auf das Substrat gestreut, und anschließend ausgehärtet.

Bei Auftragen der Komponenten als Gemisch wird bevorzugt eine Menge zwischen 300 bis 1000 g/m² verwendet. Bei einem Auftrag von maximal 1000 g/m² Pulver, weist das Pulver nach der Verpressung eine Dichte von 1,2 bis 1,4 to/m³ auf, was ca. einer Dicke der gebildeten Lage oder Oberflächenschicht von 0,7 mm entspricht.

Dabei führen größere Mengen an aufgetragenem Pulver zu längeren Presszeiten, d.h. je dicker die aufgetragene Schicht ist umso länger ist die notwendige Presszeit.

Die Erfindung wird nachfolgend unter Bezugnahme auf die Figuren der Zeichnungen an mehreren Ausführungsbeispielen näher erläutert. Es zeigen:
- Figur 1: perspektivische Ansicht eines Querschnitts einer Holzwerkstoffplatte gemäß einer ersten Ausführungsform
- Figur 2: perspektivische Ansicht eines Querschnitts einer Holzwerkstoffplatte gemäß einer zweiten Ausführungsform
- Figur 3: Draufsicht auf die Oberflächenschicht einer Holzwerkstoffplatte gemäß einer dritten Ausführungsform

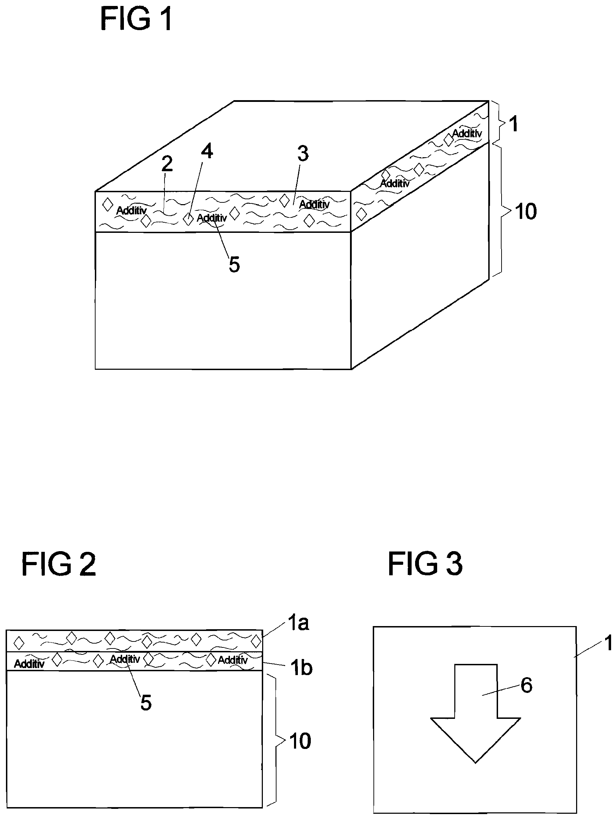

Figur 1 zeigt den Querschnitt durch eine Holzwerkstoffplatte bestehend aus einem Substrat 10 mit einer Oberflächenschicht 1. Das Substrat 10 kann dabei aus einer Trägerplatte bestehen. Des Weiteren ist es auch möglich, dass das Substrat eine Trägerplatte umfasst, auf deren Oberseite eine Dekorlage und auf deren Unterseite eine schalldämmende Schicht aufgetragen ist.

Die Oberflächenschicht enthält mindestens vier Komponenten: Zellulosefasern 2, ein Melaminharz als Bindemittel 3, Korund als abriebfeste Partikel 4 sowie eine leitfähige Substanz, ein Flammschutzmittel und/oder eine luminiszierende Substanz als Additiv 5.

In Figur 2 ist eine zweite Ausführungsform der erfindungsgemäßen Werkstoffplatten dargestellt, wobei die Oberflächenschicht 1 in die obere Lage 1a und die untere Lage 1b unterteilt ist. Die obere Lage 1a umfasst Zellulosefasern 2, Melaminharz 3 und Korund 4, wohingegen in der unteren Lage 1b zusätzlich zu den in der oberen Lage 1a verwendeten Komponenten das Additiv 5 enthalten ist. Dieser Aufbau der Oberflächenschicht kombiniert eine verschleißfeste Oberfläche mit der Fähigkeit zur Ableitung von Strom, Flammenschutzbeständigkeit und/oder Verwendung als Marker.

Die luminiszierenden Stoffe können in jeder beliebigen Geometrie mittels Schablonen in die Oberflächenschicht der Werkstoffplatten eingearbeitet werden. Figur 3 zeigt die Anordnung der Farbstoffe in der Oberflächenschicht in Form eines Pfeiles 6 als Hinweiszeichen auf einen Fluchtweg. Somit ist eine unmittelbare Integration entsprechender Hinweise auf Flucht- oder Rettungswege in Fußboden- oder Wandpaneele möglich, wodurch das Anbringen von zusätzlichen Hinweiszeichen überflüssig ist.

### Ausführungsbeispiel

Gemäß dem folgenden Beispiel wird ein Substrat mit einer Oberflächenschicht umfassend zwei Lagen beschichtet.

Dabei umfasst die untere Lage 1b als Grundschicht 57 Gew% Holzfasern/Zellulosefasern, 35 Gew% Melaminharzpulver, 3 Gew% Pigment und 5 Gew% Kohlefasern, jedoch kein Korund als abriebfeste Partikel.

In die obere Lage 1a als Deckschicht bzw. Oberschicht werden 41 Gew% Zellulosefasern, 40 Gew% Melaminharz, 15 Gew% Korund F240, 3 Gew% Pigment und 1 Gew% Kohlefasern eingebaut. Die Zugabe der abriebfesten Partikel erhöht die Verschleißfestigkeit der Oberflächenschicht.

## Patentansprüche

1. Verwendung einer Holzwerkstoffplatte als Fußbodenplatte mit einer Oberflächenschicht (1) auf einem Substrat (10), wobei die Oberflächenschicht oberhalb des Substrats (10) angeordnet ist und mindestens eine Lage (1) aufweist, wobei die mindestens eine Lage (1) natürliche oder synthetische Fasern (2), mindestens ein Bindemittel (3), abriebfeste Partikel (4) und mindestens ein Additiv (5) umfasst,
**dadurch gekennzeichnet,**
**dass** das mindestens eine Additiv (5) ausgewählt ist aus der Gruppe enthaltend zumindest leitfähige Substanzen, sowie optional zusätzlich Flammschutzmittel, luminiszierende Stoffe und Metalle und dass das Substrat (10) zusätzlich zu der Oberflächenschicht (1) eine Gegenzugbeschichtung umfasst.

2. Verwendung nach Anspruch 1, **dadurch gekennzeichnet, dass** die Oberflächenschicht mindestens eine obere Lage (1a) und eine untere Lage (1b) umfasst.

3. Verwendung nach Anspruch 1 oder 2, **dadurch gekennzeichnet, dass** die obere Lage (1a) einen Anteil zwischen 0 bis 1 Gew % des Additivs (5) aufweist.

4. Verwendung nach einem der vorhergehenden Ansprüche, **dadurch gekennzeichnet, dass** die untere Lage (1b) einen Anteil zwischen 0,5 bis 5 % des Additivs (5) aufweist.

5. Verwendung nach einem der vorhergehenden Ansprüche, **dadurch gekennzeichnet, dass** die leitfähige Substanz ausgewählt ist aus der Gruppe enthaltend Russ, Kohlefasern und Nanopartikel, insbesondere Kohlenstoffnanoröhren.

6. Verwendung nach einem der vorhergehenden Ansprüche, **dadurch gekennzeichnet, dass** das Flammschutzmittel ausgewählt ist aus der Gruppe enthaltend Phosphate, Borate, insbesondere Ammoniumpolyphosphat, Tris(tri-bromneopentyl)phosphat, Zinkborat oder Borsäurekomplexe von mehrwertigen Alkoholen.

7. Verwendung nach einem der vorhergehenden Ansprüche, **dadurch gekennzeichnet, dass** der luminiszierende Stoff ausgewählt ist aus der Gruppe enthaltend fluoreszierende und phosphoreszierende Stoffe, insbesondere Zinksulfid und Erdalkalialuminate.

8. Verwendung nach einem der vorhergehenden Ansprüche, **dadurch gekennzeichnet, dass** die natürlichen oder synthetischen Fasern ausgewählt sind aus der Gruppe enthaltend Holzfasern, Zellulosefasern, Wollfasern, Hanffasern und organische oder anorganische Polymerfasern.

9. Verwendung nach einem der vorhergehenden Ansprüche, **dadurch gekennzeichnet, dass** das Bindemittel ausgewählt ist aus der Gruppe enthaltend Melaminharze, Acrylatharze und Polyurethanharze.

10. Verwendung nach einem der vorhergehenden Ansprüche, **dadurch gekennzeichnet, dass** die abriebfesten Partikel ausgewählt sind aus der Gruppe enthaltend Aluminiumoxide, Korund, Borcarbide, Siliziumdioxide, Siliziumcarbide und Glaskugeln.

11. Verwendung nach einem der vorhergehenden Ansprüche, **dadurch gekennzeichnet, dass** das Substrat (10) eine Trägerplatte aus einem Holzwerkstoff oder aus Kunststoff oder einem Holzwerkstoff-Kunststoff-Gemisch ist, insbesondere eine Span-, mitteldichte Faser (MDF)-, hochdichte Faser (HDF)- oder Grobspan (OSB)- oder Sperrholzplatten, eine Zementfaserplatte und/oder Gipsfaserplatte ist.

12. Verwendung nach einem der vorhergehenden Ansprüche, **dadurch gekennzeichnet, dass** das Substrat (10) zusätzlich zu der Oberflächenschicht (1) mindestens eine Dekorlage, eine Trägerplatte und/oder mindestens eine schalldämmende Schicht umfasst.

13. Verwendung nach Anspruch 12, **dadurch gekennzeichnet, dass** die Dekorlage zwischen dem Substrat (10) und der Oberflächenschicht (1) angeordnet ist.

14. Verwendung nach Anspruch 12 oder 13, **dadurch gekennzeichnet, dass** die schalldämmende Schicht auf einer Unterseite des Substrats (10) angeordnet ist, die der Oberflächenschicht (1) gegenüberliegt.

15. Verwendung nach einem der Ansprüche 12 bis 14, **dadurch gekennzeichnet, dass** auf der Oberseite der Trägerplatte die Dekorlage und auf der Unterseite der Trägerplatte die schalldämmende Schicht angeordnet ist.

## Claims

1. Use of a wood-based panel as a floor panel having a surface layer (1) on a substrate (10), the surface layer being arranged above the substrate (10) and having at least one layer (1), the at least one layer (1) comprising natural or synthetic fibres (2), at least one binder (3), abrasion-resistant particles (4) and at least one additive (5),
**characterized in that**
the at least one additive (5) is selected from the group consisting of at least
conductive substances and in addition optionally flame retardants, luminescent substances and metals, and
the substrate (10) comprises a balancing coating in addition to the surface layer (1).

2. Use according to claim 1, **characterized in that** the surface layer comprises at least one upper layer (1a) and one lower layer (1b).

3. Use according to claim 1 or 2, **characterized in that** the upper layer (1a) has a proportion between 0 and 1% by weight of the additive (5).

4. Use according to any of the preceding claims, **characterized in that** the lower layer (1b) has a proportion between 0.5 and 5% of the additive (5).

5. Use according to any of the preceding claims, **characterized in that** the conductive substance is selected from the group consisting of carbon black, carbon fibres and nanoparticles, in particular carbon nanotubes.

6. Use according to any of the preceding claims, **characterized in that** the flame retardant is selected from the group consisting of phosphates, borates, in particular ammonium polyphosphate, tris(tri-bromneopentyl)phosphate, zinc borate or boric acid complexes of polyhydric alcohols.

7. Use according to any of the preceding claims, **characterized in that** the luminescent substance is selected from the group consisting of fluorescent and phosphorescent substances, in particular zinc sulphide and alkaline earth aluminates.

8. Use according to any of the preceding claims, **characterized in that** the natural or synthetic fibres are selected from the group consisting of wood fibres, cellulose fibres, wool fibres, hemp fibres and organic or inorganic polymer fibres.

9. Use according to any of the preceding claims, **characterized in that** the binder is selected from the group consisting of melamine resins, acrylic resins and polyurethane resins.

10. Use according to any of the preceding claims, **characterized in that** the abrasion-resistant particles are selected from the group consisting of aluminium oxides, corundum, boron carbides, silicon dioxides, silicon carbides and glass beads.

11. Use according to any of the preceding claims, **characterized in that** the substrate (10) is a carrier plate made of a wood-based material or of plastic or a mixture of wood-based material and plastic, in particular a particle board, medium-density fibre board (MDF), high-density fibre board (HDF) or oriented strand board (OSB) or plywood board, a fibre cement board and/or gypsum fibre board.

12. Use according to any of the preceding claims, **characterized in that** the substrate (10) comprises, in addition to the surface layer (1), at least one decorative layer, a carrier plate and/or at least one sound-absorbing layer.

13. Use according to claim 12, **characterized in that** the decorative layer is arranged between the substrate (10) and the surface layer (1).

14. Use according to claim 12 or 13, **characterized in that** the sound-absorbing layer is arranged on a bottom surface of the substrate (10) which is opposite the surface layer (1).

15. Use according to any of claims 12 to 14, **characterized in that** the decorative layer is arranged on the upper surface of the carrier plate and the sound-absorbing layer is arranged on the bottom surface of the carrier plate.

## Revendications

1. Utilisation d'une plaque en un matériau dérivé du bois comme plaque de sol ayant une couche de surface (1) sur un substrat (10), la couche de surface étant disposée au-dessus du substrat (10) et présentant au moins une feuille (1), la au moins une feuille (1) comprenant des fibres naturelles ou synthétiques (2), au moins un liant (3), des particules résistant à l'abrasion (4) et au moins un additif (5), **caractérisée en ce que**
au moins un additif (5) est choisi dans le groupe contenant au moins des substances conductrices et le cas échéant en plus des agents ignifuges, des substances luminescentes et des métaux et
**en ce que** le substrat (10) comprend en plus de la couche de surface (1) un revêtement de compensation.

2. Utilisation selon la revendication 1, **caractérisée en ce que** la couche de surface comprend au moins une feuille supérieure (la) et une feuille inférieure (1b).

3. Utilisation selon la revendication 1 ou 2, **caractérisée en ce que** la feuille supérieure (la) présente une proportion comprise entre 0 à 1 % en poids de l'additif (5).

4. Utilisation selon l'une des revendications précédentes, **caractérisée en ce que** la feuille inférieure (1b) présente une proportion comprise entre 0,5 et 5 % de l'additif (5).

5. Utilisation selon l'une des revendications précédentes, **caractérisée en ce que** la substance conductrice est choisie dans le groupe contenant de la suie, des fibres de carbone et des nanoparticules, en particulier des nanotubes de carbone.

6. Utilisation selon l'une des revendications précédentes, **caractérisée en ce que** l'agent ignifuge est choisi dans le groupe contenant les phosphates, les borates, en particulier le polyphosphate d'ammonium, le tris(tri-bromonéopentyl)phosphate, le borate de zinc ou les complexes d'acide borique d'alcools multivalents.

7. Utilisation selon l'une des revendications précédentes, **caractérisée en ce que** la substance luminescente est choisie dans le groupe contenant les substances fluorescentes et phosphorescentes, en particulier le sulfure de zinc et les aluminates d'alcalino-terreux.

8. Utilisation selon l'une des revendications précédentes, **caractérisée en ce que** les fibres naturelles ou synthétiques sont choisies dans le groupe contenant les fibres de bois, les fibres de cellulose, les fibres de laine, les fibres de chanvre et les fibres de polymères organiques ou inorganiques.

9. Utilisation selon l'une des revendications précédentes, **caractérisée en ce que** le liant est choisi dans le groupe contenant les résines de mélamine, les résines d'acrylate et les résines de polyuréthane.

10. Utilisation selon l'une des revendications précédentes, **caractérisée en ce que** les particules résistant à l'abrasion sont choisies dans le groupe contenant les oxydes d'aluminium, le corindon, les carbures de bore, les dioxydes de silicium, les carbures de silicium et les billes de verre.

11. Utilisation selon l'une des revendications précédentes, **caractérisée en ce que** le substrat (10) est une plaque support en un matériau dérivé du bois ou en plastique ou un mélange de plastique - matériau dérivé du bois, en particulier une plaque de particules de bois, de fibres de bois moyenne densité (MDF), de fibres de bois haute densité (HDF) ou de particules orientées (OSB) ou de contreplaqué, une plaque de fibrociment et/ou une plaque de plâtre renforcée de fibres.

12. Utilisation selon l'une des revendications précédentes, **caractérisée en ce que** le substrat (10) comprend en plus de la couche de surface (1) au moins une feuille de décor, une plaque support et/ou au moins une couche d'isolation phonique.

13. Utilisation selon la revendication 12, **caractérisée en ce que** la feuille de décor est disposée entre le substrat (10) et la couche de surface (1).

14. Utilisation selon la revendication 12 ou 13, **caractérisée en ce que** la couche d'isolation phonique est disposée sur une face inférieure du substrat (10) qui est opposée à la couche de surface (1).

15. Utilisation selon l'une des revendications 12 à 14, **caractérisée en ce que** la feuille de décor est disposée sur la face supérieure de la plaque support et la couche d'isolation phonique est disposée sur la face inférieure de la plaque support.
